(19) Europäisches Patentamt
European Patent Office
Office européen des brevets

(11) EP 0 749 987 B1

(12) **FASCICULE DE BREVET EUROPEEN**

(45) Date de publication et mention de la délivrance du brevet:
**24.03.1999 Bulletin 1999/12**

(51) Int Cl.[6]: **C08F 20/12**

(21) Numéro de dépôt: **96401036.7**

(22) Date de dépôt: **13.05.1996**

(54) **Procédé de polymérisation anionique en continu d'au moins un monomère (méth)acrylique pour l'obtention de polymères à haut taux de solide**

Kontinuierliches anionisches Polymerisationsverfahren von mindestens ein (Meth)Acrylmonomer für die Herstellung von Polymeren mit hohem Festgehalt

Continuous anionic polymerisation process of at least one (meth)acrylic monomer for the preparation of polymers with high solid rate

(84) Etats contractants désignés:
**BE CH DE ES FR GB IT LI NL SE**

(30) Priorité: **15.06.1995 FR 9507131**

(43) Date de publication de la demande:
**27.12.1996 Bulletin 1996/52**

(73) Titulaire: **ELF ATOCHEM S.A.**
**92800 Puteaux, Hauts de Seine (FR)**

(72) Inventeurs:
- **Vuillemin, Bruno**
**64000 Pau (FR)**
- **Nowe, Stéphane**
**64360 Monein (FR)**

(74) Mandataire: **Luziau, Nelly et al**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 524 054** **FR-A- 2 305 444**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 749 987 B1

## Description

La présente invention concerne un procédé de préparation d'homopolymères (méth)acryliques ou de copolymères d'au moins un monomère (méth)acrylique par polymérisation anionique ultra rapide conduisant à un polymère ayant une masse et une polymolécularité contrôlées et à haut taux de solide.

L'obtention de polymères à haut taux de solide présente de nombreux avantages, notamment économiques (concentration élevée en polymère en fin de polymérisation, quantité réduite de solvant rendant plus aisée la récupération finale du polymère).

La polymérisation anionique des monomères (méth)acryliques est, en général, une polymérisation rapide, si bien qu'il est plus efficace de la conduire en continu. Cependant, elle est parfois si rapide qu'il est difficile de la contrôler.

Pour résoudre le problème du contrôle de la polymérisation en vue d'obtenir un polymère "monodisperse", c'est-à-dire avec un rapport $\overline{Mw}/\overline{Mn}$, ou polymolécularité, voisin de 1, la demande de brevet japonais JP-A-6056910 propose d'utiliser un mélangeur statique permettant de mélanger rapidement et uniformément le flux de monomère et le flux d'amorceur avant la polymérisation dans un réacteur tubulaire.

Le but visé d'obtenir une polymolécularité voisine de 1 est atteint, mais au prix de plusieurs limites :

- la concentration appropriée du ou des monomère(s) dans le flux de monomère est théoriquement de 1 à 50 % en poids. Cependant, la viscosité de la solution du polymère formé augmente avec la concentration, rendant alors difficile l'opération de mélange et ayant pour conséquence une distribution encore plus large des masses moléculaires du polymère vivant final. Les deux seuls exemples de cette demande de brevet japonais utilisent des solutions de monomère de faible concentration, conduisant, en fin de polymérisation à un milieu à faible taux de solide (inférieur à 10 % en poids en supposant une conversion de 100 %).
- Par ailleurs, il est préconisé, dans cette demande de brevet japonais, pour éviter les réactions secondaires, de maintenir une température de polymérisation de -100°C à +20°C et, en particulier, dans le cas de monomères polaires comme les (méth)acrylates, de conduire la polymérisation de préférence à une température inférieure à - 40°C. Les polymérisations décrites dans les exemples sont effectuées à - 78°C.
- En outre, le réacteur de polymérisation est, de préférence, tubulaire pour faciliter l'échange de chaleur due à l'exothermie de la réaction. Ce type de réacteur n'est, cependant, pas approprié pour des réactions de polymérisation ultrarapides car le temps de polymérisation est trop court pour pouvoir échanger les calories dues à la réaction exothermique de la polymérisation.

Il est connu que la cinétique de polymérisation anionique est dépendante des conditions de polymérisation, particulièrement de la température de réaction et de la concentration du système d'amorçage.

L'enseignement de la demande de brevet japonais mentionnée précédemment conduit à utiliser un système d'amorçage et des conditions de polymérisation qui entraînent une constante de propagation qui serait, à - 40°C (température limite supérieure préférée pour le cas du monomère méthacrylate de méthyle, selon ce document), d'environ 100 l $mol^{-1}$ $s^{-1}$, ce qui ne permet pas des réactions ultrarapides.

Par contre, avec un système d'amorçage tel que celui décrit dans le document EP-A-524054, c'est-à-dire un mélange d'un amorceur et d'un ligand du type alcoxyalcoolate, la constante de propagation de la réaction (kp(t)) est, pour le méthacrylate de méthyle, supérieure ou égale à $10^4$ l $mol^{-1}$ $s^{-1}$ à 0°C et à $10^3$ l $mol^{-1}$ $s^{-1}$ à -40°C. Avec un tel amorceur, la réaction est donc ultra rapide, à tel point qu'il est difficile de la contrôler même lorsqu'elle est réalisée en continu. (Les constantes de propagation mentionnées précédemment, pour le cas de la demande de brevet japonais comme pour le cas du document EP-A-524054, ont été déterminées, par la Demanderesse, par la méthode de G.V. Schultz dans European Polymer Journal - Vol. 10, pages 121-130 - 1974).

La société déposante a donc cherché à mettre au point un procédé de polymérisation anionique permettant, en particulier, des réactions ultra rapides, pouvant être effectué même sans la nécessité d'opérer avec des réacteurs tubulaires et sans s'astreindre à des conditions de polymérisation isothermes de manière à éviter les réactions secondaires, en contrôlant la masse moléculaire du polymère obtenu ainsi que sa polymolécularité pour qu'elle atteigne une valeur souhaitée, et en parvenant à une concentration en polymère obtenu supérieure à celles des procédés connus à ce jour, qui est inférieure à 10 % en poids.

Le procédé selon l'invention, pour préparer en continu, par polymérisation anionique des homopolymères (méth)acryliques ou des copolymères à partir d'au moins un monomère (méth)acrylique, consiste à mélanger, pendant un temps tm, un flux Fm comprenant le ou les monomère(s) à (co)polymériser et un flux Fa d'un système d'amorçage de (co)polymérisation, le rapport des flux Fm et Fa étant maintenu constant, puis à injecter en continu, dans un réacteur de (co)polymérisation, le flux Fr résultant du mélange des flux Fm et Fa et est caractérisé en ce que le mélange des flux Fm et Fa est réalisé dans un micro mélangeur, en utilisant un système d'amorçage conduisant à une constante de propagation kp(t) supérieure ou égale à 500 l $mol^{-1}$ $s^{-1}$, à une température initiale To, le temps de séjour, tm, dans le micro mélangeur étant inférieur au temps de (co)polymérisation et la concentration en monomère(s) dans le flux Fr

étant supérieure ou égale à 10 % en poids.

Selon un mode de réalisation préférée de l'invention, la température initiale To est déterminée pour permettre une polymérisation quasi adiabatique.

Conformément à la présente invention, on assure un mélange des réactifs (monomère(s) et système d'amorçage) pratiquement sans amorçage dans le micromélangeur, ce qui permet d'effectuer ensuite la polymérisation dans n'importe quel type de réacteur, avec une forte concentration en monomère (ce qui conduit à un produit final à haut taux de solide), car une viscosité élevée n'est pas atteinte lors du mélange, et en fixant la température initiale de mélange (ou de polymérisation), on peut d'une part, opérer dans des conditions adiabatiques et, d'autre part, garantir un amorçage contrôlé, donc un bon contrôle de la masse moléculaire et de la polymolécularité dans les limites choisies et habituellement utilisées pour les applications matériaux (plaques extrudées, granulés pour pièces injectés, par ex.), par exemple une polymolécularité inférieure à 3.

Par ailleurs, la présente invention offre l'avantage complémentaire de conduire, dans le cas de la fabrication des polyméthacrylates, à une structure majoritairement syndiotactique, même à des températures finales de polymérisation élevées.

Par le procédé selon l'invention, on peut former des homopolymères, des copolymères statistiques ou des copolymères séquencés.

Les monomères que l'on peut (co)polymériser par le procédé de l'invention sont choisis notamment dans le groupe comprenant les monomères (méth)acryliques, les maléimides, vinyl aromatiques et les diéniques.

Le terme "monomère (méth)acrylique", tel qu'employé ci-dessus, signifie un monomère choisi parmi les (méth) acrylates de formule respectivement :

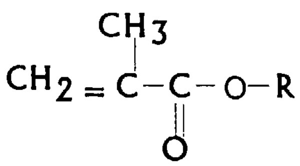

et

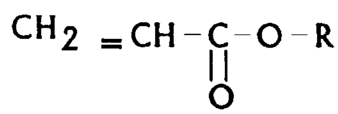

dans laquelle R est choisi parmi les radicaux alkyle en $C_1$-$C_{18}$, linéaires ou ramifiés, primaires, secondaires ou tertiaires, cycloalkyle en $C_5$-$C_{18}$,(alcoxy en $C_1$-$C_{18}$)-alkyle en $C_1$-$C_{18}$, (alkylthio en $C_1$-$C_{18}$)-alkyle en $C_1$-$C_{18}$, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ; les (méth)acrylates de glycidyle, de norbornyle, d'isobornyle, les mono- et di-(alkyl en $C_1$-$C_{18}$)-(méth)acrylamides.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Le terme "maléimide", tel qu'employé ci-dessus, désigne un monomère maléimide non substitué ou un monomère maléimide N-substitué de formule :

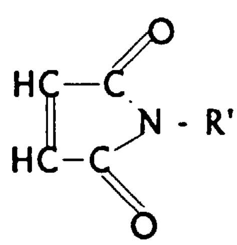

dans laquelle R' est un radical alkyle, arylalkyle, aryle ou alkylaryle ayant de 1 à 12 atomes de carbone. Des exemples non limitatifs sont : le N-éthyl-maléimide, le N-isopropylmaléimide, le N-n-butylmaléimide, le N-isobutylmaléimide, le

N-tert.-butylmaléimide, le N-n-octylmaléimide, le N-cyclohexylmaléimide, le N-benzylmaléimide et le N-phénylmaléimide. Le maléimide préféré est le N-cyclohexylmaléimide.

Par monomères vinylaromatiques, on entend un monomère aromatique à insaturation éthylénique tel que styrène, vinyltoluène, alphaméthylstyrène, méthyl-4-styrène, méthyl-3-styrène, méthoxy-4-styrène, éthyl-4-styrène, diméthyl-3,4-styrène, tert.butyl-3-styrène, dichloro-2,4-styrène, dichloro-2-6-styrène, vinyl-1-naphtalène, vinyl-2-pyridine et vinyl-4-pyridine.

Par monomère diénique, on entend un diène choisi parmi les diènes linéaires ou cycliques, conjugués ou non-conjugués comme par exemple le butadiène, l'isoprène, le 1,3-pentadiène.

Dans la (co)polymérisation des monomères ci-dessus, le système d'amorçage est composé d'un amorceur et, éventuellement, d'un ligand, conduisant à une constante de propagation supérieure ou égale à 500 l $mol^{-1}$ $s^{-1}$.

Comme amorceur, on peut utiliser un amorceur monofonctionnel de formule générale (I) :

$$R^1\text{-}M \qquad \text{(I)}$$

dans laquelle :

- M désigne un métal alcalin ou alcalino-terreux ; et
- $R^1$ désigne :
  - un radical alkyle à chaîne droite ou ramifiée, contenant 2 à 6 atomes de carbone ; ou
  - un radical aryle à un ou plusieurs cycles, éventuellement substitué ; ou
  - un radical alcényl en $C_2$-$C_6$ substitué par aryle ou alkylaryle ; ou
  - un radical alkyle, linéaire ou ramifié, contenant 1 à 6 atomes de carbone, substitué par au moins un groupe phényle,

ou un amorceur monofonctionnel anionique des (méth)acrylates choisi par exemple parmi les α-lithioisobutyrates et les amidures, ou encore un amorceur bifonctionnel de formule (II) :

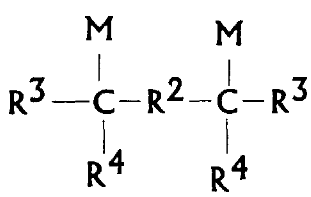

(II)

dans laquelle :

- M est tel que défini ci-dessus ; et
- $R^2$ représente une radical organique divalent, aliphatique, cycloaliphatique, aromatique ou comportant au moins un groupement cycloaliphatique ou aromatique, $R^2$ pouvant comporter des substituants, et
- $R^3$ et $R^4$ représentent chacun indépendamment un radical organique monovalent, aliphatique, cycloaliphatique, aromatique ou comportant au moins un groupement cycloaliphatique ou aromatique, $R^3$ et $R^4$ pouvant comporter des substituants.

A titre d'exemples d'amorceurs monofonctionnels de formule (I), on peut citer le sec.-butyllithium, le n-butyllithium, le fluorényllithium, l'alphaméthylstyryllithium, le 1,1-diphénylhexyllithium (DPHLi), le diphénylméthyllithium ou -sodium ou -potassium et le 1,1-diphényl-3-méthylpentyl-lithium.

A titre d'exemples d'amorceurs bifonctionnels de formule (II), on peut citer le 1,1,4,4-tétraphényl-1,4-dilithiobutane, le 1,1,4,4-tétraphényl-1,4-disodiobutane.

On peut aussi utiliser des précurseurs d'amorceurs bifonctionnels bien connus, comme le naphtalène lithium, le naphtalène sodium, le naphtalène potassium et leurs homologues.

Par ailleurs, de façon particulièrement préférée, on associe à l'amorceur tel que défini ci-dessus au moins un ligand constitué par un alcoolate de métal alcalin de formule (III) ou (IV) :

$$R^5(OR^6)_n\ OM^1 \quad (III)$$

$$M^1(OR^6)_n\ OM^1 \quad (IV)$$

dans laquelle :

- $M^1$ représente un métal alcalin ;
- $R^5$ est un radical alkyle, linéaire ou ramifié, ayant de 1 à 6 atomes de carbone ou un radical arylalkyle dans lequel le reste alkyle est en $C_1$-$C_6$, ou un radical alkylaryle dans lequel le groupe alkyle a de 1 à 6 atomes de carbone ;
- R6 est un radical alkylène, linéaire ou ramifié, ayant de 2 à 4 atomes de carbone ;
- n est le nombre entier 1, 2 ou 3.

Comme exemples de tels alcoolates, on peut citer ceux dans lesquels le radical $R^5$ est un radical méthyle, éthyle, butyle et benzyle, $R^5$ étant avantageusement le radical méthyle, et $R^6$ est le radical éthylène, propylène, butylène, isopropylène, $R^6$ étant de préférence le radical éthylène. $M^1$ est le lithium, le sodium ou le potassium, et représente, de préférence, le lithium.

Des exemples particuliers sont les suivants :

- $CH_3(OCH_2CH_2)OLi$
- $CH_3(OCH_2CH_2)_2OLi$
- $CH_3(OCH_2CH_2)_3OLi$
- $nBu(OCH_2CH_2)_2OLi$
- $Et(OCH_2CH_2)_2OLi$
- $Li(OCH_2CH_2)_2OLi$
- $Li(OCH_2CH_2)_3OLi$

Les alcoolates des formules (III) et (IV) sont préparés, par exemple, par réaction respectivement de $R^5(OR^6)_nOH$ ou $H(OR^6)_nOH$ avec toute base dont le pKA est supérieur au pKA du couple $R^5(OR^6)_nOM^1/R^5(OR^6)_nOH$ ou du couple $M^1(OR^6)_nOM^1/H(OR^6)_nOH$. Ainsi, les alcoolates de lithium peuvent être préparés par réaction avec du lithium métallique ou par réaction avec un composé organométallique de lithium en solvant polaire ou apolaire.

Le rapport molaire du ligand de formule (III) ou (IV) à l'amorceur dans le système d'amorçage tel que défini ci-dessus peut varier dans les limites très larges. La quantité de ligand (III) ou (IV) doit être suffisante pour permettre la formation d'un complexe avec le centre actif de polymérisation et ainsi stabiliser ce dernier. La quantité de ligand (III) ou (IV) dépend de l'amorceur choisi et de monomères à (co)polymériser. Le rapport molaire ligand (III) ou (IV)/amorceur est généralement compris entre 1 et 50. Pour l'obtention de meilleurs résultats, ce rapport est compris, de préférence, entre 1 et 10.

Le ou les monomère(s) peuvent être à l'état pur ou en solution dans au moins un solvant aprotique, polaire ou non polaire, choisi parmi les solvants aromatiques, tels que le benzène, le toluène, l'éthylbenzène ou les solvants tels que le tétrahydrofuranne, le diglyme, le tétraglyme, l'ortho-terphényle, le biphényle, la décaline, la tétraline ou le diméthylformamide. L'amorceur et le ligand associé sont en solution dans un solvant du même type.

Conformément au procédé selon l'invention, on choisit de préférence une température $T_o$ tenant compte des conditions quasi adiabatiques et de la température finale désirée. $T_o$ peut être comprise entre - 100 et + 100°C, de préférence entre - 70 et + 20°C.

Selon l'invention, dans le flux combiné Fr, la concentration en amorceur est généralement comprise entre $10^{-4}$ et $10^{-1}$ mole/l et la concentration en monomère(s) est d'au moins 10% en poids, notamment de 30 % à 70 % en poids.

Dans la présente description, on entend par "temps de polymérisation" la durée de la polymérisation que l'on peut considérer comme commençant lorsque les flux Fm et Fa sont injectés dans le micromélangeur et comme finissant lorsque l'on n'observe pratiquement plus d'exothermie due à la réaction de polymérisation. On peut aussi facilement déterminer ce temps de polymérisation, comme il est bien connu, à partir des constantes de propagation et des conditions de réaction (par exemple, concentration en amorceur, température).

Selon l'invention, on peut utiliser tout micromélangeur permettant un très faible temps de séjour et nécessairement un temps de séjour inférieur au temps de polymérisation, par exemple un micromélangeur de type cyclone (ou à jets tangentiels) ou du type à jets d'impacts, par exemple les micromélangeurs utilisés dans les polymérisations RIM (Réaction Injection Molding).

Comme réacteur de polymérisation, on peut utiliser un réacteur tubulaire, un réacteur agité continu, un réacteur à film mince, une tour d'atomisation, une extrudeuse dégazeuse ou toute autre installation où s'effectue le dégazage. Lorsque le réacteur est du type tour d'atomisation, extrudeuse dégazeuse ou toute autre installation où a lieu le dégazage, on récupère le polymère par dévolatilisation des solvants et monomères résiduels dans le réacteur lui-même.

Comme indiqué précédemment, dans les conditions de l'invention, la vitesse de polymérisation est ultra rapide. L'échange de chaleur est donc difficile. Pour le faciliter, on peut employer tout réacteur permettant la régulation de la température de polymérisation en utilisant la chaleur latente de vaporisation des volatils présents dans le milieu.

Par ailleurs, on maintient généralement des rapports constants de flux de monomère(s) et d'amorceur par tout système approprié et, par exemple, grâce à l'utilisation de pompes à piston ou à membranes, assistées d'un système amortisseur de pulsation et couplés entre elles pour assurer des pulsations en phase ou bien grâce à l'utilisation de moyens de contrôle de débits, tels que des vannes de régulation.

Comme indiqué ci-dessus, la (co)polymérisation est de préférence conduite dans des conditions adiabatiques, ce qui est intéressant car il n'y a pas à fournir d'énergie au cours de la polymérisation. Par ailleurs, la température finale étant plus élevée, il est plus facile de dégazer la solution de (co)polymère obtenue, et la viscosité plus faible de cette dernière permet une manipulation ou un transport plus aisé. En outre, la rapidité du procédé permet une productivité plus élevée.

La présente invention permet aussi la préparation de copolymères séquencés : la première séquence polymère est préparée comme décrit ci-dessus ; c'est une séquence polymère vivante ; dans un deuxième micromélangeur, situé avant le réacteur de polymérisation, on injecte un flux d'un second monomère, le polymère vivant déjà formé jouant le rôle de macroamorceur pour la polymérisation de ce second monomère, et le cas échéant, on injecte ensuite, dans un troisième micromélangeur, un flux d'un troisième monomère, le copolymère biséquencé vivant déjà formé jouant le rôle de macroamorceur pour la polymérisation de ce troisième monomère.

Pour préparer un polymère séquencé, il est aussi possible d'utiliser comme amorceur un polymère vivant formé indépendamment du présent procédé à partir de monomères (méth)acryliques, vinylaromatiques ou diéniques conjugués par exemple, et de l'injecter dans le premier micromélangeur au lieu de la solution du système d'amorçage mentionné précédemment.

Pour obtenir les (co)polymères recherchés à partir des (co)polymères vivants, on désactive ces derniers par réaction avec une source de protons consistant notamment en un alcool, de l'eau ou un acide protonique ; et, le cas échéant, on conduit une transestérification ou une hydrolyse en milieu acide du (co)polymère obtenu.

Les (co)polymères selon l'invention sont obtenus avec des concentrations dans le milieu de polymérisation supérieures ou égales à 10 % en poids ; ils ont une masse moléculaire moyenne en nombre généralement comprise entre 5 000 et 500 000, et une polymolécularité inférieure à 3.

Dans le cas où le monomère est le méthacrylate de méthyle, le poly(méthacrylate de méthyle) obtenu a généralement une syndiotacticité supérieure à 65 %.

Exemple 1 (comparatif)

L'installation de polymérisation utilisée est celle représentée de façon schématique sur la Figure 1 : une solution du système d'amorçage est préparée dans une capacité C1, et une solution du monomère, dans une capacité C2. Chacun des deux flux est adressé à un échangeur E pour être amené à la température initiale de polymérisation $T_o$ ; les deux flux sont adressés ensuite à un mélangeur M, qui dans cet exemple est un mélangeur statique, comme décrit dans la demande de brevet JP6056910, puis au réacteur de polymérisation R, qui est un réacteur tubulaire usuel.

Le méthacrylate de méthyle (MMA) utilisé est purifié par passage sur tamis moléculaire, puis sur alumine ; le toluène utilisé est purifié sur tamis moléculaire.

Dans la capacité C1, on prépare une solution dans le toluène du système d'amorçage DPHLi/

$CH_3OCH_2CH_2OLi$ de rapport molaire 1/10, à 1,7 x $10^{-2}$ mole/l de DPHLi. Dans la capacité C2, on stocke une solution de MMA à 312,5 g/l dans le toluène. Le taux de MMA visé dans la solution de polymère est de 21 % en poids. Le flux de la solution de MMA de 4 l/h et le flux de la solution du système d'amorçage de 2 l/h sont amenés à la température de 40°C, grâce aux échangeurs E, puis mélangés à travers le mélangeur statique M. Les solutions sont véhiculées grâce à des pompes à piston, résistant à 300 bars, placées en amont du mélangeur. L'installation de ces pompes ne permettent pas un rapport de flux constant.

Le temps de séjour dans le mélangeur statique est de 1,6 s, et le temps de polymérisation de 0,5 s.

La solution de polymère obtenue est collectée dans la capacité C3 où elle est désactivée par l'ajout d'une solution MeOH/acide acétique. Le taux de conversion, déterminé par la mesure du taux de monomère résiduel, par chromatographie en phase gazeuse, est supérieur à 99 %.

Les caractéristiques du PMMA synthétisé sont :

$\overline{Mn}$ = 58 000

$\overline{Mw}/\overline{Mn}$ = 3,9

La constante de propagation kp (-40°C) est d'environ 9 ± 2 x $10^3$ l $mol^{-1}s^{-1}$.

L'utilisation d'un mélangeur statique n'est pas adaptée à ce procédé de polymérisation et conduit à un polymère d'indice de polymolécularité élevé. Les conditions de réaction entraînent un temps de mélange supérieur au temps de polymérisation.

**<u>Exemple 2</u>** (comparatif)

On conduit la polymérisation comme décrit à l'exemple 1, à la différence que la concentration visée en PMMA est de 30 %, d'où il résulte que la concentration en MMA dans le flux de monomère est de 446 g de MMA par litre et celle en amorceur dans le deuxième flux est à 2,4 x $10^{-2}$ moles de DPHLi par litre.

Lors de la mise en régime du réacteur, on constate une pression, au refoulement des pompes, supérieure à 200 bars, ce qui met en marche le système protégeant les pompes à piston. On arrête la polymérisation. L'absence de contrôle de la distribution de masse moléculaire conduit à la synthèse d'une proportion de très haute masse, qui augmente fortement la viscosité du milieu.

Le fait d'avoir augmenté le taux de solide a accru le mauvais contrôle de la polymérisation qui n'a pu être obtenue. L'utilisation d'un mélangeur statique n'est pas possible dans ces conditions.

**<u>Exemple 3</u>** (comparatif)

On procède comme à l'exemple 2, à la différence que la température initiale $T_o$ est de - 5°C. Le temps de séjour dans le mélangeur statique est de 1,6 s. Le temps de polymérisation est d'environ 0,45 s.

Le taux de conversion mesuré après polymérisation est de 98,7 %.

Les caractéristiques du PMMA synthétisé sont :

$\overline{Mn}$ = 37 000

$\overline{Mw}/\overline{Mn}$ = 7,2

La constante de propagation kp (-5°C) est d'environ 25 ± 5 x $10^3$ 1 $mol^{-1}s^{-1}$.

On a procédé comme à l'exemple 2, mais en augmentant la température de manière à diminuer la viscosité finale, qui est très dépendante de la température.

On a pu obtenir une polymérisation, mais les flux non constants ainsi que la durée longue du mélange ont conduit à une polymolécularité très élevée.

**<u>Exemple 4</u>** (comparatif)

On procède comme à l'exemple 1, à ceci près que l'on couple les pompes à piston de façon qu'elles soient parfaitement en phase, afin de conserver un rapport de flux parfaitement constant.

Les caractéristiques du PMMA synthétisé sont :

$\overline{Mn}$ = 60 000

$\overline{Mw}/\overline{Mn}$ = 3,4

Le fait de travailler avec des rapports de flux constants a permis d'améliorer l'indice de polymolécularité qui reste cependant trop élevé.

**<u>Exemples 5 à 12</u>**

On remplace le mélangeur statique de l'exemple 1 par un module de micromélange composé d'un séparateur de flux divisant le flux (1) de système d'amorçage et le flux (2) de MMA en deux, les quatre flux résultants alimentant

un micromélangeur (3) à flux tangentiels (de type cyclone) relié à un réacteur R, comme représenté à la figure 2.

La figure 3 est une vue en coupe transversale du micromélangeur de la figure 2. Les entrées (1) et (2) permettent respectivement l'introduction des flux du système d'amorçage et de monomère ; le mélange a lieu dans la chambre (3) du micromélangeur et le flux combiné se dirige vers le réacteur tubulaire dont la section (4) est représentée en pointillé.

Pour conduire les exemples 5 à 11, on utilise un micromélangeur dont la chambre de mélange a un volume de 0,3 ml, et pour conduire l'exemple 12, on utilise un micromélangeur dont la chambre de mélange a un volume de 3 µl.

On conduit la polymérisation du PMMA comme à l'exemple 1. On maintient constant le rapport flux de monomère/flux de système d'amorçage en utilisant des pompes à piston couplées et en phase. Les polymérisations effectuées dans le réacteur tubulaire après le micromélangeur sont adiabatiques.

Les caractéristiques du procédé et celles du PMMA synthétisé pour chacun de ces exemples 5 à 12 sont rapportées dans le tableau 1 ci-après.

Dans ces exemples, le temps de polymérisation est supérieur au temps de mélange et on obtient alors des polymolécularités toutes inférieures à 2,5 et une pression au refoulement des pompes faible.

La comparaison des exemples 2 et 5 montre que la polymérisation peut être conduite à 30 % de polymère lorsque les rapports de flux sont constants et le temps de mélange inférieur au temps de polymérisation.

Les exemples 5 à 7 montrent que même en faisant varier les températures de polymérisation, la réaction est bien contrôlée.

On peut aussi noter que, lorsque le temps de mélange est très faible, la polymolécularité est très faible (exemple 12).

En outre, même quand la température finale est très élevée (exemple 11), la polymérisation est quantitative, l'indice de polymolécularité et les masses molaires contrôlés.

Ce procédé permet donc de travailler à des températures de polymérisation inaccessibles habituellement et conduisant à des taux élevés de solide.

Avec un système d'amorçage conduisant à une constante de propagation (kp) très élevée, donc très supérieure à la constante de propagation des réactions secondaires, comme c'est le cas dans l'invention, on peut avoir une polymérisation bien contrôlée.

TABLEAU 1

| Exemples | 5 | 6 | 7 | 8 | 9 | 10 | 11 | 12 |
|---|---|---|---|---|---|---|---|---|
| Rapport molaire Ligand/Amorceur | 5 | 5 | 5 | 5 | 5 | 4 | 5 | 5 |
| Concentration en amorceur dans le flux total [Io] x $10^3$ (mole/l) | 8,86 | 8,86 | 10,4 | 10,4 | 8,86 | 8,86 | 17 | 8,61 |
| Concentration en monomère dans le flux total (% en poids) | 30 | 30 | 35 | 35 | 30 | 30 | 40 | 20 |
| Temps de séjour dans le micromélangeur (seconde) | 0,05 | 0,05 | 0,05 | 0,05 | 0,05 | 0,05 | 0,11 | 5 x $10^{-4}$ |
| Flux total (Kg/h) | 24 | 24 | 24 | 24 | 24 | 24 | 11 | 24 |
| Temps de polymérisation (seconde) | 0,20 +/- 0,05 | 0,2 +/- 0,05 | 0,18 +/- 0,05 | 0,18 +/-0,05 | 0,18 +/- 0,05 | 0,30 +/- 0,06 | 0,25 +/- 0,05 | 0,25 +/- 0,05 |
| Température initiale de Polymérisation To (°C) | -40 | -29 | -26 | -20 | -39 | -21 | -13 | -21 |
| Température finale de Polymérisation enregistrée (°C) | 59 +/- 5 | 71 +/- 5 | 88 +/- 5 | 91 +/- 5 | 62 +/- 5 | 80 +/- 5 | 96 +/- 5 | 44 +/- 5 |
| Mn | 41 100 | 41 600 | 38 000 | 37 400 | 41 600 | 42 200 | 36 600 | 49 900 |
| Mw/Mn | 1,65 | 2 | 1,84 | 2,02 | 1,82 | 2,44 | 2,24 | 1,48 |
| Conversion (%) | 99,8 | 99,0 | 96,4 | 95,5 | 99,6 | 98,2 | 92,2 | 99,8 |
| Tacticité (% en triades syndiotactiques) | 72 | 72 | 71 | 70 | 74 | 69 | 66 | 73 |

**Exemples 13** : Synthèse d'homopolymères d'acrylate de tert-butyle

On opère comme à l'exemple 5 avec les différences suivantes :

Le méthacrylate de méthyle est remplacé par de l'acrylate de tert-butyle. La concentration en amorceur dans le flux total est de 4,5 x $10^{-3}$ mol/l. La concentration en monomère dans le flux total est de 15 % en poids. Le temps de séjour dans le micromélangeur est de 0,1 s. Le flux total est de 12 kg/h. La température initiale de polymérisation est de - 40°C. La température finale de polymérisation est de 0°C ± 5.

*Résultats*

$\overline{Mn}$ = 45 200
Ip = 1,45
Conversion = 99,8 %

**Exemple 14** : Synthèse de copolymère séquencé polyacrylate de tert-butyle-b-PMMA.

On opère comme à l'exemple 5. Cependant, l'amorceur utilisé dans cet exemple est le polymère d'acrylate de tert-butyle vivant préparé à l'exemple 13. La concentration en monomère MMA dans le flux total est de 15 % en poids. La température initiale de polymérisation est la température finale de la polymérisation de l'exemple 13, soit 0°C. La température finale de polymérisation est de 51°C ± 5.

*Résultats*

$\overline{Mn}$ = 71 000
Ip = 2,05
Conversion = 99,5 %

**Exemple 15** : Synthèse de copolymère séquencé polybutadiène-b-PMMA.

On opère comme à l'exemple 14, mais on utilise, comme amorceur, du polybutadiène vivant préparé de la manière suivante :

A 15l de toluène préalablement purifié, on ajoute, à 0°C, 70 x $10^{-3}$ mole de sec-butyllithium, puis 1350 g de butadiène. On laisse polymériser pendant 24 h. On ajoute alors 70 x $10^{-2}$ mole de méthoxyéthoxylate de lithium et 70 x $10^{-3}$ mole de diphényléthylène. Une coloration rouge apparaît. Après 15 mn, la solution de polybutadiène (PBD) vivant, utile comme macroamorceur, est prête : $\overline{Mn}$ = 25 000 (étalon PBD); Ip = 1,17.

La température finale après la polymérisation de la séquence PMMA est de 48°C ± 5. Le taux de conversion est de 99,6 %.

*Résultats pour le copolymère*

$\overline{Mn}$ = 104 000 (étalon PMMA)
Ip = 1,96

**Exemple 16**

On opère comme à l'exemple 15, mais pour préparer le polymère macroamorceur, on utilise, au lieu du butadiène, un mélange 50/50 en poids de butadiène et de styrène.

La température finale de polymérisation, après formation de la séquence PMMA, est de 46°C ± 5. Le taux de conversion est de 99,6 %. Le macroamorceur et le copolymère final sont caractérisés en GPC/étalon PMMA-Macroamorceur: copoly BD/Styréne : $\overline{Mn}$ = 35 000; Ip =1,26.
Copolymère final = $\overline{Mn}$ =89 000
Ip = 2,55

**Revendications**

1. Procédé pour préparer en continu, par polymérisation anionique, des homopolymères (méth)acryliques ou des copolymères à partir d'au moins un monomère (méth)acrylique, consistant à mélanger, pendant un temps tm, un

flux Fm comprenant le ou les monomère(s) à (co)polymériser et un flux Fa d'un système d'amorçage de (co) polymérisation, le rapport des flux Fm et Fa étant maintenu constant, puis à injecter en continu, dans un réacteur de (co)polymérisation, le flux Fr résultant du mélange des flux Fm et Fa, caractérisé en ce que le mélange des flux Fm et Fa est réalisé dans un micro mélangeur en utilisant un système d'amorçage conduisant à une constante de propagation kp(t) supérieure ou égale à 500 l $mol^{-1}s^{-1}$ à une température initiale To, le temps de séjour, tm, dans le micro mélangeur étant inférieur au temps de (co)polymérisation et la concentration en monomère(s) dans le flux Fr étant supérieure ou égale à 10 % en poids.

**2.** Procédé selon la revendication 1, caractérisé en ce que la température initiale To est déterminée pour permettre une polymérisation quasi adiabatique.

**3.** Procédé selon l'une des revendications 1 et 2, caractérisé par le fait qu'on choisit le ou les monomère(s) polymérisable(s) par voie anionique parmi les monomères méthacryliques, les monomères acryliques, les maléimides, vinylaromatiques et diéniques.

**4.** Procédé selon l'une des revendications 1 à 3, caractérisé par le fait qu'on choisit, comme amorceur, un amorceur monofonctionnel de formule (I) :

$$R^1\text{-M} \qquad (I)$$

dans laquelle :

- M désigne un métal alcalin ou alcalino-terreux ; et
- $R^1$ désigne :
  - un radical alkyle à chaîne droite ou ramifiée, contenant 2 à 6 atomes de carbone ; ou
  - un radical aryle à un ou plusieurs cycles, éventuellement substitué ; ou
  - un radical alcényle en $C_2$-$C_6$ substitué par aryle ou alkylaryle ; ou
  - un radical alkyle, linéaire ou ramifié, contenant 1 à 6 atomes de carbone, substitué par au moins un groupe phényle,

ou un amorceur monofonctionnel anionique des (méth)acrylates choisi parmi les $\alpha$-lithioisobutyrates et les amidures,
ou bien un amorceur bifonctionnel de formule (II)

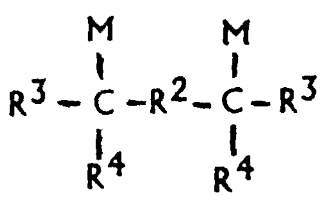

(II)

dans laquelle :

- M est tel que défini ci-dessus ; et
- $R^2$ représente un radical organique divalent, aliphatique, cycloaliphatique, aromatique ou comportant au moins un groupement cycloaliphatique ou aromatique, $R^2$ pouvant comporter des substituants, et
- $R^3$ et $R^4$ représentent chacun indépendamment un radical organique monovalent, aliphatique, cycloaliphatique, aromatique ou comportant au moins un groupement cycloaliphatique ou aromatique, $R^3$ et $R^4$ pouvant comporter des substituants.

**5.** Procédé selon la revendication 4, caractérisé par le fait qu'on associe à l'amorceur au moins un ligand constitué par un alcoolate de métal alcalin de formule (III) ou (IV) :

$$R^5(OR^6)_nOM^1 \quad (III)$$

$$M^1(OR^6)_nOM^1 \quad (IV)$$

dans laquelle :

- $M^1$ représente un métal alcalin
- $R^5$ est un radical alkyle, linéaire ou ramifié, ayant de 1 à 6 atomes de carbone ou un radical arylalkyle dans lequel le reste alkyle est en $C_1$-$C_6$, ou un radical alkylaryle dans lequel le groupe alkyle a de 1 à 6 atomes de carbone ;
- $R^6$ est un radical alkylène, linéaire ou ramifié, ayant de 2 à 4 atomes de carbone ;
- n est le nombre entier 1, 2 ou 3.

**6.** Procédé selon la revendication 5, caractérisé par le fait que le rapport molaire ligand/amorceur est compris entre 1 et 50, et, de préférence, entre 1 et 10.

**7.** Procédé selon l'une quelconque des revendications 1 à 6, caractérisé par le fait qu'on choisit une température $T_o$ comprise entre - 100°C et + 100°C, de préférence entre - 70 et + 20°C.

**8.** Procédé selon l'une des revendications 1 à 7, caractérisé par le fait que la concentration en amorceur dans le flux combiné Fr est comprise entre $10^{-4}$ et $10^{-1}$ mole/l.

**9.** Procédé selon l'une des revendications 1 à 8, caractérisé par le fait que la concentration en monomère(s) dans le flux combiné Fr est d'au moins 10% en poids, notamment de 30 % à 70 % en poids.

**10.** Procédé selon l'une des revendications 1 à 9, caractérisé par le fait que le solvant ou mélange de solvants du ou des monomère(s) et celui du système d'amorçage sont des solvants aprotiques, polaires ou non polaires, choisis chacun parmi les solvants aromatiques, tels que le benzène, le toluène, l'éthylbenzène ou les solvants tels que le tétrahydrofuranne, le diglyme, le tétraglyme, l'ortho-terphényle, le biphényle, la décaline, la tétraline ou le diméthylformamide et leurs mélanges.

**11.** Procédé conforme à l'une des revendications 1 à 8, caractérisé en ce que le flux Fm comprend le(s) monomère (s) à l'état pur.

**12.** Procédé selon l'une des revendications 1 à 11, caractérisé par le fait que l'on utilise, comme micromélangeur, un micromélangeur de type cyclone ou à jets tangentiels ou un micromélangeur à jets d'impact.

**13.** Procédé selon l'une des revendications 1 à 12, caractérisé par le fait que l'on utilise comme réacteur de polymérisation, un réacteur tubulaire, un réacteur agité continu, un réacteur à film mince, une tour d'atomisation, une extrudeuse dégazeuse.

**14.** Procédé selon l'une des revendications 1 à 13, pour la préparation d'un copolymère séquencé, caractérisé par le fait qu'on injecte, dans un deuxième micromélangeur, un flux d'un second monomère, le polymère vivant déjà formé jouant le rôle de macroamorceur pour la polymérisation de ce second monomère, et le cas échéant, on injecte ensuite un flux d'un troisième monomère dans un troisième micromélangeur, le copolymère biséquencé vivant déjà formé jouant le rôle de macroamorceur pour la polymérisation de ce troisième monomère.

**15.** Procédé conforme à l'une quelconque des revendications 1 à 3, caractérise en ce que l'on injecte dans le micromélangeur, comme amorceur, un polymère vivant préparé à partir d'un monomère (méth)acrylique, vinylaromatique ou diénique conjugué.

**16.** Procédé selon l'une des revendications 1 à 15, caractérisé par le fait qu'on désactive le (co)polymère obtenu par réaction avec une source de protons consistant notamment en un alcool, de l'eau ou un acide protonique : et, le cas échéant, on conduit une transestérification ou une hydrolyse en milieu acide du (co)polymère obtenu.

**17.** Procédé selon l'une des revendications 1 à 16, dans lequel le monomère utilisé est le méthacrylate de méthyle, conduisant à un poly(méthacrylate de méthyle) ayant une syndiotacticité supérieure à 65 %.

## Claims

**1.** Process for the continuous preparation of (meth)acrylic homopolymers or copolymers from at least one (meth) acrylic monomer by anionic polymerization, which consists in mixing, for a time tm, a flow Fm comprising the monomer(s) to be (co)polymerized and a flow Fa of a (co)polymerization initiator system, the ratio of the flows Fm and Fa being kept constant, and then in continuously injecting, into a (co)polymerization reactor, the flow Fr resulting from the mixing of the flows Fm and Fa, characterized in that the mixing of the flows Fm and Fa is performed in a micro-mixer using an initiator system leading to a propagation constant kp(t) which is greater than or equal to 500 $l\ mol^{-1}\ s^{-1}$ at an initial temperature To, the residence time, tm, in the micro-mixer being less than the (co) polymerization time and the concentration of monomer(s) in the flow Fr being greater than or equal to 10 % by weight.

**2.** Process according to Claim 1, characterized in that the initial temperature To is determined so as to allow a virtually adiabatic polymerization.

**3.** Process according to either of Claims 1 and 2, characterized in that the anionically polymerizable monomer(s) is or are chosen from methacrylic monomers, acrylic monomers, maleimides, vinylaromatics and dienes.

**4.** Process according to one of Claims 1 to 3, characterized in that the initiator chosen is a monofunctional initiator of formula (I):

$$R^1\text{-}M \qquad (I)$$

in which:

- M denotes an alkali metal or alkaline-earth metal;
  and
- $R^1$ denotes:
  - an alkyl radical with a straight or branched chain, containing 2 to 6 carbon atoms; or
  - an aryl radical with one or more rings, optionally substituted; or
  - a $C_2$-$C_6$ alkenyl radical substituted with aryl or alkylaryl; or
  - a linear or branched alkyl radical containing 1 to 6 carbon atoms, substituted with at least one phenyl group,

or an anionic monofunctional initiator for (meth)acrylates chosen from α-lithioisobutyrates and metal amides, or alternatively a difunctional initiator of formula (II):

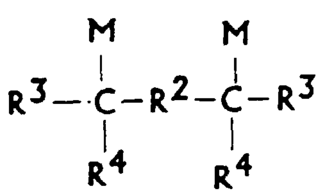

(II)

in which:

- M is as defined above; and
- $R^2$ represents an aliphatic, cycloaliphatic or aromatic divalent organic radical or an organic radical containing at least one cycloaliphatic or aromatic group, it being possible for $R^2$ to contain substituents, and
- $R^3$ and $R^4$ each independently represent an aliphatic, cycloaliphatic or aromatic monovalent organic radical or an organic radical containing at least one cycloaliphatic or aromatic group, it being possible for $R^3$ and $R^4$

to contain substituents.

5. Process according to Claim 4, characterized in that the initiator is combined with at least one ligand consisting of an alkali metal alkoxide of formula (III) or (IV):

$$R^5(OR^6)_nOM^1 \quad (III)$$

$$M^1(OR^6)_nOM^1 \quad (IV)$$

in which:

- $M^1$ represents an alkali metal;
- $R^5$ is a linear or branched alkyl radical having from 1 to 6 carbon atoms or an arylalkyl radical in which the alkyl residue is $C_1$-$C_6$, or an alkylaryl radical in which the alkyl group has from 1 to 6 carbon atoms;
- $R^6$ is a linear or branched alkylene radical having from 2 to 4 carbon atoms;
- n is the integer 1, 2 or 3.

6. Process according to Claim 5, characterized in that the ligand/initiator molar ratio is between 1 and 50 and preferably between 1 and 10.

7. Process according to any one of Claims 1 to 6, characterized in that a temperature $T_o$ of between -100°C and +100°C, preferably of between -70 and +20°C, is chosen.

8. Process according to one of Claims 1 to 7, characterized in that the initiator concentration in the combined flow Fr is between $10^{-4}$ and $10^{-1}$ mol/l.

9. Process according to one of Claims 1 to 8, characterized in that the concentration of monomer(s) in the combined flow Fr is at least 10 % by weight, in particular from 30 % to 70 % by weight.

10. Process according to one of Claims 1 to 9, characterized in that the solvent or mixture of solvents for the monomer (s) and that for the initiator system are polar or non-polar, aprotic solvents each chosen from aromatic solvents such as benzene, toluene or ethylbenzene, or solvents such as tetrahydrofuran, diglyme, tetraglyme, ortho-terphenyl, biphenyl, decalin, tetralin or dimethylformamide, and mixtures thereof.

11. Process according to one of Claims 1 to 8, characterized in that the flow Fm comprises the monomer(s) in the pure state.

12. Process according to one of Claims 1 to 11, characterized in that the micro-mixer used is a micro-mixer of cyclone type or one with tangential jets or an impact-jet micro-mixer.

13. Process according to one of Claims 1 to 12, characterized in that the polymerization reactor used is a tubular reactor, a continuously stirred reactor, a thin film reactor, a spraying tower or a degassing extruder.

14. Process according to one of Claims 1 to 13, for the preparation of a block copolymer, characterized in that a flow of a second monomer is injected into a second micro-mixer, the living polymer already formed acting as a macro-initiator for the polymerization of this second monomer, and, where appropriate, a flow of a third monomer is then injected into a third micro-mixer, the living diblock copolymer already formed acting as a macro-initiator for the polymerization of this third monomer.

15. Process in accordance with any one of Claims 1 to 3, characterized in that a living polymer prepared from a (meth) acrylic, vinylaromatic or conjugated diene monomer is injected, as initiator, into the micro-mixer.

16. Process according to one of Claims 1 to 15, characterized in that the (co)polymer obtained is deactivated by reaction with a source of protons consisting in particular of an alcohol, water or a protic acid: and, where appropriate, the (co)polymer obtained is transesterified or hydrolysed in acidic medium.

**17.** Process according to one of Claims 1 to 16, in which the monomer used is methyl methacrylate, leading to a poly (methyl methacrylate) having a syndiotacticity of greater than 65 %.

## Patentansprüche

**1.** Verfahren zur kontinuierlichen Herstellung mittels anionischer Polymerisation von (Meth-)Acrylhomopolymeren oder -copolymeren ausgehend von mindestens einem (Meth-)Acrylmonomer, wobei man während einer Zeit tm einen Fluß Fm, der das oder die zu (co-)polymerisierenden Monomere umfaßt, und einen Fluß Fa eines (Co-)Polymerisationsstartersystems mischt, wobei das Verhältnis des Flusses Fm zu dem Fluß Fa konstantgehalten wird, man anschließend kontinuierlich in einen (Co-)Polymerisationsreaktor den Fluß Fr einspritzt, der aus der Mischung des Flusses Fm und des Flusses Fa resultiert, dadurch gekennzeichnet, daß die Mischung des Flusses Fm und des Flusses Fa in einem Mikromischer hergestellt wird, indem man ein Startersystem verwendet, der zu einer Propagationskonstante (Fortschreitungskonstante) kp(t) von mehr als oder gleich 500 $l \cdot mol^{-1} \cdot s^{-1}$ bei einer Anfangstemperatur $T_0$ führt, wobei die Verweildauer tm in dem Mikromischer geringer ist als die (Co-)Polymerisationszeit und die Konzentration an Monomer(en) in dem Fluß Fr größer als oder gleich 10 Gew.-% ist.

**2.** Verfahren nach Anspruch 1, dadurch gekennzeichnet, daß die Anfangstemperatur $T_0$ festgesetzt wird, um eine quasi-adiabatische Polymerisation zu ermöglichen.

**3.** Verfahren nach Anspruch 1 oder 2, dadurch gekennzeichnet, daß man das oder die auf anionischem Weg polymerisierbaren Monomere auswählt aus Methacrylmonomeren, Acrylmonomeren, Maleinimiden, vinylaromatischen Monomeren und Dienmonomeren.

**4.** Verfahren nach einem der Ansprüche 1 bis 3, dadurch gekennzeichnet, daß man als Starter einen monofunktionellen Starter der Formel (I)

$$R^1\text{-}M \qquad (I)$$

auswählt, wobei in der Formel (I)

- M ein Alkali- oder Erdalkalimetall bezeichnet; und
- $R^1$

  - einen geradkettigen oder verzweigten Alkylrest mit 2 bis 6 Kohlenstoffatomen; oder
  - einen gegebenenfalls substituierten Arylrest mit einem oder mehreren Ringen; oder
  - einen mit Aryl oder Alkylaryl substituierten $C_2$-$C_6$ Alkenylrest; oder
  - einen linearen oder verzweigten Alkylrest mit 1 bis 6 Kohlenstoffatomen, der mit mindestens einer Phenylgruppe substituiert ist, bezeichnet,

oder einen anionischen monofunktionellen Starter für die (Meth-)acrylate, ausgewählt aus α-Uthiumisobutyraten und Amiden,
oder auch einen bifunktionellen Starter der Formel (II)

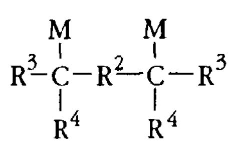 (II)

in der:

- M die zuvor angegebene Bedeutung hat; und
- $R^2$ einen divalenten zweiwertigen organischen Rest darstellt, der aliphatisch, cycloaliphatisch oder aromatisch ist oder mindestens eine aromatische oder cycloaliphatische Gruppe umfaßt, wobei $R^2$ Substituenten enthal-

ten kann; und

- $R^3$ und $R^4$ jeweils, unabhängig voneinander, einen monovalenten einwertigen organischen Rest darstellen, der aliphatisch, cycloaliphatisch oder aromatisch ist oder mindestens eine aromatische oder cycloaliphatische Gruppe umfaßt, wobei $R^3$ und $R^4$ Substituenten enthalten können.

**5.** Verfahren nach Anspruch 4, dadurch gekennzeichnet, daß man gemeinsam mit den Startern mindestens einen Liganden einsetzt, der aus einem Alkalimetallalkoholat der Formel (III) oder (IV)

$$R^5(OR^6)_nOM^1 \quad (III)$$

$$M^1(OR^6)_nOM^1 \quad (IV)$$

besteht, in der:

- $M^1$ ein Alkalimetall darstellt;
- $R^5$ ein linearer oder verzweigter Alkylrest mit 1 bis 6 Kohlenstoffatomen oder ein Arylalkylrest, in dem der Alkylrest ein $C_1$-$C_6$-Rest ist, oder ein Alkylarylrest ist, bei dem die Alkylgruppe 1 bis 6 Kohlenstoffatome aufweist;
- $R^6$ ein linearer oder verzweigter Alkylenrest mit 2 bis 4 Kohlenstoffatomen ist;
- n eine ganze Zahl 1, 2 oder 3 ist.

**6.** Verfahren nach Anspruch 5, dadurch gekennzeichnet, daß das Molverhältnis Ligand/Starter zwischen 1 und 50 liegt, vorzugsweise zwischen 1 und 10.

**7.** Verfahren nach einem der Ansprüche 1 bis 6, dadurch gekennzeichnet, daß man eine Temperatur $T_0$ zwischen -100 °C und +100 °C auswählt, vorzugsweise zwischen -70 °C und +20 °C.

**8.** Verfahren nach einem der Ansprüche 1 bis 7, dadurch gekennzeichnet, daß die Reaktion an Startern in dem kombinierten Fluß Fr zwischen $10^{-4}$ und $10^{-1}$ mol/l liegt.

**9.** Verfahren nach einem der Ansprüche 1 bis 8, dadurch gekennzeichnet, daß die Konzentration an Monomer(en) in dem kombinierten Fluß Fr mindestens 10 Gew.-% beträgt, insbesondere 30 Gew.-% bis 70 Gew.-%.

**10.** Verfahren nach einem der Ansprüche 1 bis 9, dadurch gekennzeichnet, daß das Lösungsmittel oder die Mischung der Lösungsmittel des oder der Monomere und das Lösungsmittel oder die Mischung der Lösungsmittel des Startersystems aprotische, polare oder nicht polare Lösungsmittel sind, die jeweils ausgewählt sind aus aromatischen Lösungsmitteln wie Benzol, Toluol oder Ethylbenzol oder Lösungsmitteln wie Tetrahydrofuran, Diglyme, Tetraglyme, Orthoterphenyl, Biphenyl, Dekalin, Tetralin oder Dimethylformamid oder deren Mischungen.

**11.** Verfahren nach einem der Ansprüche 1 bis 8, dadurch gekennzeichnet, daß der Fluß Fm das oder die Monomer (en) im Reinzustand umfaßt.

**12.** Verfahren nach einem der Ansprüche 1 bis 11, dadurch gekennzeichnet, daß man als Mikromischer einen Mikromischer vom Zyklontyp oder mit Tangentialstrahl oder einem Mikromischer mit Treffstrahl verwendet.

**13.** Verfahren nach einem der Ansprüche 1 bis 12, dadurch gekennzeichnet, daß man als Polymerisationsreaktor einen röhrenförmigen Reaktor, einen kontinuierlichen Rüllrreaktor, einen Reaktor mit dünnem Film, einen Atomisationsturm oder einen Entgasungsextruder verwenden kann.

**14.** Verfahren nach einem der Ansprüche 1 bis 13 zur Herstellung eines Blockcopolymers, dadurch gekennzeichnet, daß man in einen zweiten Mikromischer einen Fluß eines zweiten Monomers injiziert, wobei das bereits gebildete lebende Polymer die Rolle eines Makrostarters für die Polymerisation dieses zweiten Monomers spielt, und man gegebenenfalls anschließend einen Fluß eines dritten Monomers in einen dritten Mikromischer injiziert, wobei das bereits gebildete Zweiblockcopolymer die Rolle eines Makrostarters für die Polymerisation dieses dritten Monomers spielt.

**15.** Verfahren nach einem der Ansprüche 1 bis 3, dadurch gekennzeichnet, daß man in den Mikromischer als Starter ein lebendes Polymer injiziert, das ausgehend von einem (Meth-)Acrylmonomer, einem vinylaromatischen Monomer oder einem konjugierten Dienmonomer hergestellt worden ist.

**16.** Verfahren nach einem der Ansprüche 1 bis 15, dadurch gekennzeichnet, daß man das durch die Reaktion erhaltene (Co-)Polymer mit einer Protonenquelle desaktiviert, die insbesondere aus einem Alkohol, Wasser oder einer Protonensäure besteht, und man gegebenenfalls eine Umesterung oder eine Hydrolyse des erhaltenen (Co-)Polymers in saurem Milieu durchführt.

**17.** Verfahren nach einem der Ansprüche 1 bis 16, bei dem das verwendete Monomer Methylmethacrylat ist, was zu einem Poly(methylmethacrylat) mit einer Syndiotaktizität von mehr als 65 % führt.

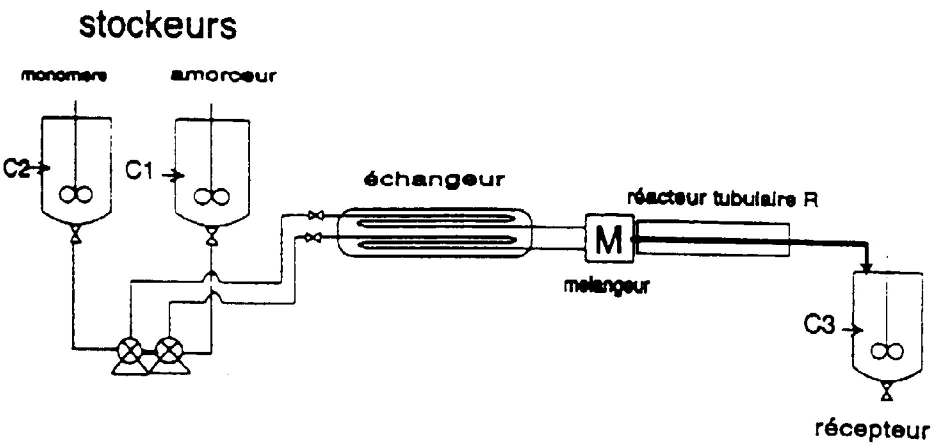


FIGURE 1

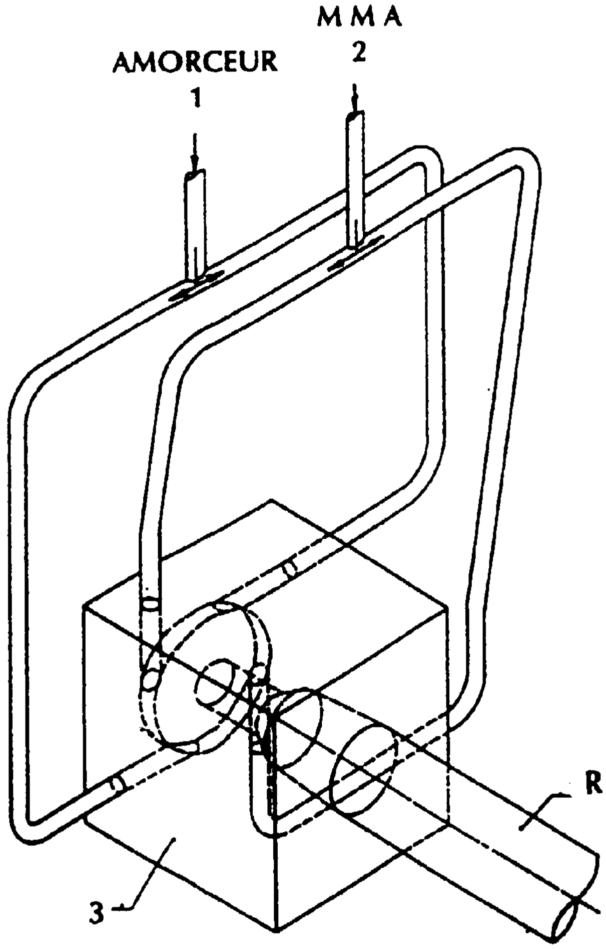


FIGURE 2

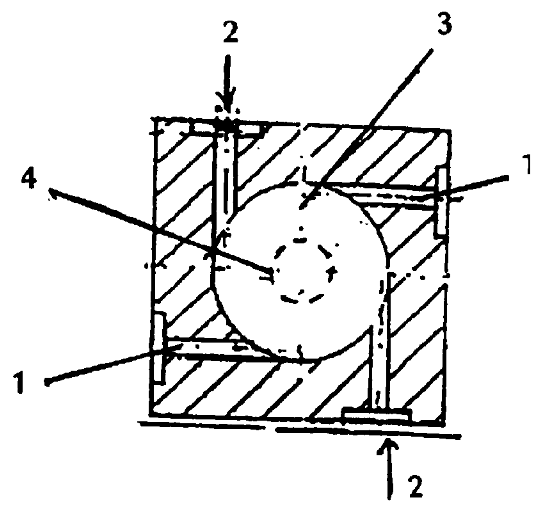


FIGURE 3